# EUROPÄISCHE PATENTSCHRIFT

(11) **EP 2 415 029 B1**
(45) Veröffentlichungstag und Bekanntmachung des Hinweises auf die Patenterteilung: **12.02.2020**
(21) Anmeldenummer: 10713326.6
(22) Anmeldetag: 01.04.2010
(51) Int. Cl.: G07C 9/00

(54) **VERFAHREN UND VORRICHTUNG ZUR ZUGANGSKONTROLLE**
Method and device for access control
Procédé et dispositif destinés au contrôle d'accès

(30) Priorität: 03.04.2009 EP 09157266
(43) Veröffentlichungstag der Anmeldung: 08.02.2012
(73) Patentinhaber: Inventio AG, 6052 Hergiswil (CH)
(72) Erfinder: MIZON, John, CH-6330 Cham (CH)
(86) Internationale Anmeldenummer: PCT/EP2010/054421
(87) Internationale Veröffentlichungsnummer: WO 2010/112586

(56) Entgegenhaltungen:
- EP-A2- 1 705 595
- WO-A2-01/41081
- WO-A2-2006/000618
- FR-A1- 2 873 217
- US-B1- 7 377 426

## Beschreibung

### Technisches Gebiet

Die Erfindung betrifft ein Verfahren und eine Vorrichtung zur Zugangskontrolle.

### Stand der Technik

Aus der Druckschrift WO 2006/000618 A2 ist ein Verfahren zur drahtlosen Eingabe eines Zielrufs für einen Aufzug bekannt. Dabei wird in einem ersten Schritt zwischen dem Mobiltelefon der Person, die mit dem Mobiltelefon eine Aufzugskabine angefordert hat, und der Aufzugsteuerung eine drahtlose Verbindung aufgebaut. In einem zweiten Schritt wird von der Aufzugssteuerung die Person und das Stockwerk auf dem sich die Person befindet, identifiziert und das zu dieser Person gehörende Benutzerprofil ausgewählt. Anschliessend ermittelt die Aufzugssteuerung anhand des Benutzerprofils das Zielstockwerk und sorgt dafür, dass für die Person eine Aufzugskabine auf dem Stockwerk, auf dem sie sich befindet, bereit gestellt und danach das Zielstockwerk angefahren wird.

Aus der Druckschrift JP 2005-280882 ist ein Aufzug mit einem Sicherheitssystem bekannt, bei dem ein Mobiltelefon zur Identifikation einer Person benutzt wird. Damit die Person Zugang zum Aufzug erhält, wird die auf dem Anzeigefeld des Mobiltelefons angezeigte Identifikationsnummer mit einem optischen Lesegerät erfasst und an eine Identifikationseinheit weitergeleitet. Wenn die Identifikationsnummer und damit die Person bei der Identifikationseinheit registriert ist, wird dieser Person Zugang zum Aufzug gewährt.

Aus der Druckschrift WO 01/41081 A2 ist ein Bestellverfahren für Token bekannt, bei dem ein Nutzer per Telefon oder SMS einen Token bestellen kann. Nach Eingang der Bestellung wird der Token erzeugt und an den Nutzer verschickt.

Aus der Druckschrift US 7 377 426 B1 ist ein interaktives System zum Ankündigen eines Besuchers bekannt. Ein Gastgeber kann die Daten (Name, Datum, Zeit) eines erwarteten Besuchers in einer Datenbank eingeben. Erscheint der erwartete Besucher zum vereinbarten Termin, erhält der Gastgeber eine entsprechende Benachrichtigung.

### Darstellung der Erfindung

Eine Aufgabe der Erfindung ist es, ein Verfahren und eine Vorrichtung zur Zugangskontrolle zu einem Gebäude, einem Gebäudebereich, einem Raum, einer Aufzugskabine oder einem Aufzug anzugeben. Dabei soll sichergestellt werden, dass nur jene Personen Zugang erhalten, die auch wirklich zugangsberechtigt sind. Eine Manipulation zum Zwecke des Missbrauchs soll weitestgehend ausgeschlossen sein.

Die Aufgabe wird durch ein Verfahren zur Zugangskontrolle mit den Merkmalen gemäss Patentanspruch 1 und durch eine Vorrichtung gemäss Patentanspruch 10 gelöst.

Eine nicht beanspruchte Ausführung des Verfahrens zur Zugangskontrolle umfasst folgende Schritte. Mit einem Mobiltelefon wird an einen Zugangsknoten ein Identifikationscode gesendet. Falls der Identifikationscode als gültig erkannt wird, wird vom Zugangsknoten an das Mobiltelefon ein Zugangscode gesendet und auf der Anzeige des Mobiltelefons dargestellt. Mit einer Kamera wird der Zugangscode erfasst, und falls der Zugangscode als gültig erkannt wird, wird der Zugang gewährt.

Vorteilhafte Weiterbildungen der Erfindung ergeben sich aus den in den abhängigen Patentansprüchen angegebenen Merkmalen.

Bei einer Ausführungsform des erfindungsgemässen Verfahrens ist der Identifikationscode die Telefonnummer des Mobiltelefons.

Bei einer weiteren Ausführungsform des erfindungsgemässen Verfahrens ist der Zugangscode ein zweidimensionaler optischer Code.

Bei einer dritten Ausführungsform des erfindungsgemässen Verfahrens ist der Zugangscode ein Data Matrix Code oder ein QR Code.

Darüber hinaus kann bei dem erfindungsgemässen Verfahren vorgesehen sein, dass der Identifikationscode vom Zugangsknoten an eine Steuereinheit geleitet wird, die dann prüft, ob der Identifikationscode in einer Liste mit zulässigen Identifikationscodes enthalten ist. Falls dies der Fall ist, wird der Zugangscode an den Zugangsknoten geleitet.

Zudem kann es von Vorteil sein, wenn bei dem Verfahren zur Zugangskontrolle ein Aufzug zur Benutzung freigegeben wird, wenn der Zugang gewährt wurde.

Bei einer Weiterbildung des erfindungsgemässen Verfahrens ist der Zugangscode zeitlich beschränkt gültig. Dadurch wird die Gefahr eines Missbrauchs weiter reduziert.

Bei einer anderen Weiterbildung des erfindungsgemässen Verfahrens ist der Zugangscode nur einmal verwendbar. Dadurch wird die Gefahr eines Missbrauchs weiter reduziert.

Das erfindungsgemässe Verfahren kann zur Zugangskontrolle zu einem Gebäude, einem Gebäudebereich, einer Aufzugskabine oder einem Aufzug verwendet werden.

Bei der erfindungsgemässen Vorrichtung kann das optische Lesegerät ein Scanner oder eine Kamera sein. Schliesslich wird ein Computerprogrammprodukt vorgeschlagen, das auf einem von einem Computer benutzbaren Medium gespeichert ist, das für den Computer lesbaren Programmcode enthält, und das dafür sorgt, dass der Computer das beschriebene Verfahren zur Zugangskontrolle durchführt. Der Computer kann Teil der Steuereinheit oder des Zugangsknotens sein.

### Kurze Beschreibung der Zeichnungen

Im Folgenden wird die Erfindung mit mehreren Ausführungsbeispielen anhand von vier Figuren weiter erläutert.
- Figur 1: zeigt in Form eines Blockdiagramms eine mögliche Ausführungsform der erfindungsgemässen Vorrichtung zur Zugangskontrolle.
- Figur 2: zeigt ein Beispiel für einen Data Matrix Code.
- Figur 3: zeigt ein Beispiel für einen QR Code.
- Figur 4: zeigt ein Flussdiagramm zur Veranschaulichung des erfindungsgemässen Verfahrens zur Zugangskontrolle.
- Figur 5: zeigt ein weiteres Beispiel eines erfindungsgemässen Verfahrens zur Zugangskontrolle.

### Wege zur Ausführung der Erfindung

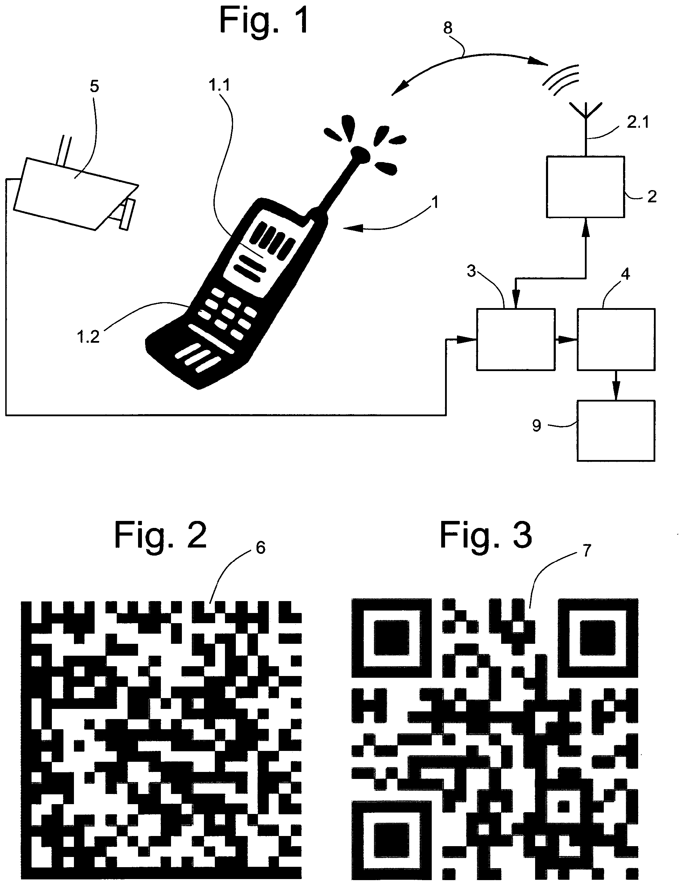

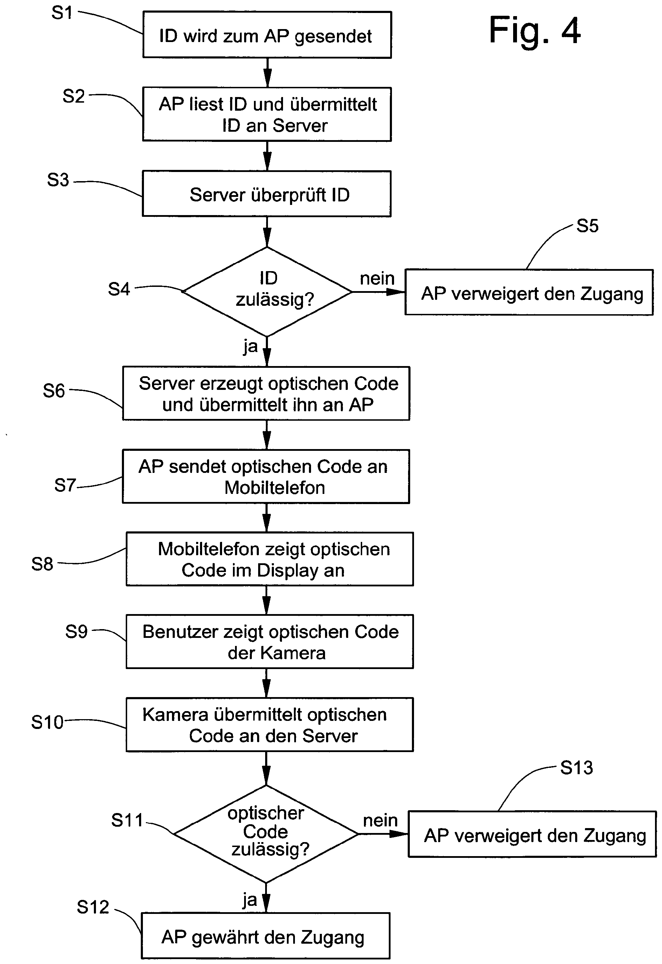

Im Folgenden wird eine Ausführungsform der Erfindung anhand der Figuren 1 und 4 erläutert. In Figur 1 ist in Form eines Blockdiagramms eine mögliche Ausführungsform der Vorrichtung zur Zugangskontrolle dargestellt. Figur 4 zeigt das Flussdiagramm zur Veranschaulichung einer Ausführungsform des Verfahrens zur Zugangskontrolle.

Damit eine Person einen Zutritt oder Zugang zu einem Gebäude, einem Gebäudebereich, wie beispielsweise einem Raum oder einem Aufzug 9 erhält, kann sich die Person mit ihrem Mobiltelefon 1 bei einem entsprechenden Zugangsknoten 2, welcher im Folgenden auch als Access Point AP bezeichnet wird, identifizieren. Sobald die Person mit ihrem Mobiltelefon 1 in die Reichweite des Zugangsknotens 2 gelangt, wird über eine Funkverbindung 8 ein Identifikationscode ID vom Mobiltelefon 1 an den Zugangsknoten 2 gesendet (Schritt S1).

Die Funkverbindung 8 kann beispielsweise über Bluetooth erfolgen. Bluetooth ist ein Standard gemäss IEEE 802.15.1 und dient der kabellosen Vernetzung von Geräten über eine kurze Distanz. Bluetooth bildet dabei die Schnittstelle, über die das Mobiltelefon 1 und der Zugangsknoten 2 miteinander kommunizieren können.

Der Zugangsknoten 2 ist dazu mit einer entsprechenden Antenne 2.1 ausgestattet. Nachdem der Zugangsknoten 2 den Identifikationscode ID empfangen hat, leitet er ihn an eine Steuereinheit 3 weiter (Schritt S2). Die Steuereinheit 3 kann beispielsweise ein Server sein. Der Zugangsknoten 2 und die Steuereinheit 3 sind in der Regel räumlich getrennt angeordnet. Dies ist aber nicht zwingend. In einem Gebäude können sich auch mehrere Zugangsknoten 2 befinden, die dann allesamt mit der Steuereinheit 3 verbunden sind.

Der Identifikationscode ID ist vorteilhafter Weise die Telefonnummer des Mobiltelefons 1. Es kann aber auch vorgesehen sein, dass die Person, die das Mobiltelefon 1 benutzt, einen bestimmten Code, beispielsweise ein Passwort, über die Tastatur 1.2 des Mobiltelefons 1 eingeben muss, der dann über die Funkverbindung 8 an den Zugangsknoten 2 übermittelt wird. In diesem Fall entspricht der über die Tastatur 1.2 eingegebene Code dem Identifikationscode ID.

In einem weiteren Schritt S3 überprüft der Server 3 den empfangenen Identifikationscode ID. Falls der Identifikationscode ID nicht als zulässig erachtet wird (Schritt S4), wird vom Server 3 dem Zugangsknoten 2 mitgeteilt, dass der Person der Zugang zu einem bestimmten Equipment, wie beispielsweise einem Aufzug 9 zu verweigern ist (Schritt S5). Falls der Identifikationscode ID hingegen als zulässig erachtet wird (Schritt S4), generiert der Server 3 einen Zugangscode (Schritt S6) und übermittelt diesen an den Zugangsknoten 2. Der Zugangscode wird im Folgenden auch als optischer Code bezeichnet.

Der Zugangscode kann zeitlich beschränkt gültig sein. Dadurch wird erreicht, dass einer Person nur für eine gewisse Zeitspanne der Zugang gewährt wird. Zudem kann vorgesehen sein, dass der Zugangscode nur ein einziges Mal gültig ist, so dass er, nachdem er einmal benutzt wurde, kein weiteres Mal mehr benutzt werden kann. Dadurch wird Missbrauch verhindert. So kann das Mobiltelefon 1 von keiner weiteren Person benutzt werden, um sich mit dem selben Zugangscode Zugang zu verschaffen.

Des Weiteren kann folgendes vorgesehen sein. Sobald der Person, die das Mobiltelefon 1 bei sich trägt, der Zugang gewährt wurde, wird für eine bestimmte Zeitdauer und/oder für einen bestimmten Zugangsknoten ein weiterer Zugang mit dem selben Mobiltelefon 1 gesperrt. Dadurch wird verhindert, dass das Mobiltelefon 1 einer anderen Person überreicht wird, die sich dann mit diesem Mobiltelefon Zugang verschafft.

Als Zugangscode kann vom Server 3 beispielsweise ein Data Matrix Code 6 generiert werden. Figur 2 zeigt ein Beispiel für einen solchen Data Matrix Code 6. Der Begriff Code bedeutet in diesem Zusammenhang nicht die Verschlüsselung von Daten, um diese geheim zu halten, sondern die grafische Abbildung der Daten in binären Symbolen. Der Data Matrix Code ist ein zweidimensionaler Barcode oder 2D-Code, der in verschiedenen Code-Schemata, zum Beispiel "ECC n" existiert. ECC steht für Error Checking and Correction Algorithm und das nachfolgende n für einen Wert zwischen 0 und 200. Das am sichersten lesbare Codeschema ist das Schema ECC 200. Die Grösse des quadratischen oder auch rechteckigen Codebildes wird aus einer grossen Auswahlmenge bestimmt, die Symbol-Elemente des Codebildes sind quadratisch oder rund. Der Data Matrix Code ist bei der Internationalen Organisation für Normung (ISO) genormt und in den ISO Spezifikationen ISO/IEC 16022:2000 und ISO/IEC 24720:2006 sowie in weiteren Normen für Anwendungen beschrieben, wie beispielsweise in DIN-Normen und DIN-EN-Normen. Diese Normen sind industrieweit verbindlich. Durch die Verwendung eines genormten Codes wird sicher gestellt, dass der Code unabhängig vom Hersteller des Kodierers oder des Lesegeräts gelesen werden kann.

Beim Data Matrix Code 6 ist die Information in einer quadratischen oder rechteckigen Fläche als Muster von gleich grossen Punkten kodiert. Die Punkte sind schwarze oder weisse Kästchen, die aneinander anschliessen oder runde Punkte mit Lücken dazwischen. Die einheitliche Symbolgrösse und der feste Symbolabstand machen das Lesen des Bildes und das Dekodieren der Information sicher und den Data Matrix Code in der flächenmässigen Ausdehnung kompakt. Beim Lesen des Data Matrix Codes wird die Anordnung der Punkte innerhalb der Umrandung und im Raster der Matrix erfasst.

Der Data Matrix Code 6 enthält redundante Daten, so dass beispielsweise mit einer Reed-Solomon-Fehlerkorrektur beim ECC 200 bis zu 25 % Fehler im Codebild korrigiert werden können. Dies ist insbesondere dann von Vorteil, wenn Teile des Codebilds verdeckt oder unlesbar sind.

Alternativ dazu kann als Zugangscode vom Server 3 beispielsweise auch ein QR Code 7 generiert werden. Figur 3 zeigt ein Beispiel für einen solchen QR Code 7. Der QR Code 7 ist ebenfalls ein zweidimensionaler Barcode oder 2D-Code, wobei QR für Quick Response, also für eine schnelle Antwort steht.

Auch beim QR Code 7 bedeutet der Begriff Code nicht die geheime Verschlüsselung von Daten, sondern die Abbildung der Daten in binären Symbolen. Der QR Code 7 besteht aus einer quadratischen Matrix aus schwarzen und weissen Punkten, welche die codierten Daten im Dualsystem darstellen. Eine spezielle Markierung in drei der vier Ecken des Quadrats gibt die Orientierung vor. Im QR Code sind die Daten redundant vorhanden, so dass selbst wenn bis zu 30% des QR Codes zerstört sind, dieser dennoch richtig gelesen werden kann. Mit dem QR Code 7 können bis zu 7.089 numerische Zeichen, 4.296 alphanumerische Zeichen oder 2.953 Bytes gespeichert werden. Der Standard für den QR Code findet sich in der ISO-Norm ISO/IEC18004.

Sowohl der Data Matrix Code 6 als auch der QR Code 7 werden mit einem optischen Lesegerät 5, wie zum Beispiel einem Scanner oder einer Kamera maschinell eingelesen. Die in den Codes 6 und 7 enthaltenen Daten können dann elektronisch weiterverarbeitet werden.

Nachdem der Server 3 den Zugangscode 6 beziehungsweise 7 generiert hat und an den Zugangsknoten 2 übermittelt hat, wird in einem Schritt S7 der Zugangscode 6 beziehungsweise 7 über die Funkverbindung 8 vom Zugangsknoten 2 an das Mobiltelefon 1 gesendet.

Daraufhin wird im Schritt S8 der Zugangscode 6 beziehungsweise 7 auf dem Display 1.1 des Mobiltelefons 1 dargestellt. Der Benutzer des Mobiltelefons 1 kann nun diesen Zugangscode einer Kamera 5 zeigen, die das aufgenommene Bild mit dem Zugangscode an den Server 3 sendet (Schritt S10). Der Server 3 prüft daraufhin, ob der Zugangscode zulässig ist (Schritt S11). Dies kann beispielsweise dadurch erfolgen, dass der Server 3 den von der Kamera 5 aufgenommenen Zugangscode mit dem Zugangscode vergleicht, den der Server an das Mobiltelefon 1 gesandt hat. Falls der Zugangscode als zulässig erachtet wird (Schritt S11), teilt der Server 3 dem Zugangsknoten 2 mit, dass der Person der Zugang gewährt wird (Schritt S12). Falls der Zugangscode hingegen nicht als zulässig erachtet wird (Schritt S11), wird vom Server 3 dem Zugangsknoten 2 mitgeteilt, dass der Person der Zutritt oder die Benutzung eines bestimmten Equipments, wie beispielsweise eines Aufzugs 9 zu verweigern ist (Schritt S13). Falls der Zugang zum Aufzug 9 verweigert wird, teilt die Steuereinheit 3 dies der Aufzugssteuerung 4, die zur Steuerung des Aufzugs 9 dient, mit. Die Aufzugssteuerung 4 leitet daraufhin die entsprechenden Massnahmen ein.

Der Begriff Zugang wird im vorliegenden Kontext als generischer Begriff verstanden, der sowohl den Eintritt oder Zutritt zu einem Gebäude, einem Raum oder einer Aufzugskabine als auch die Benutzung eines Geräts oder Equipments, wie beispielsweise einem Aufzug, umfasst.

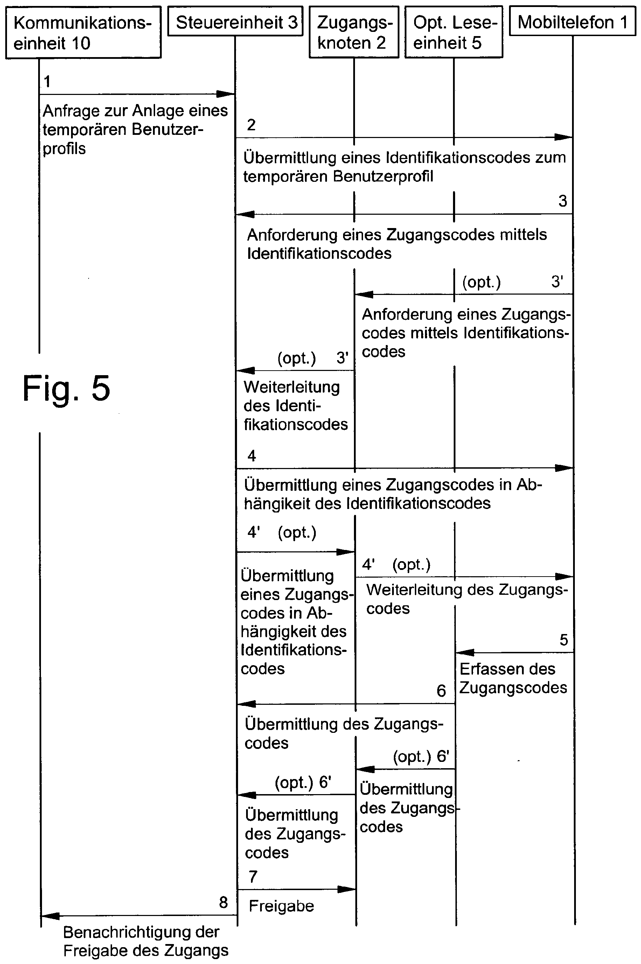

Figur 5 zeigt Ablaufschema eines weiteren Beispiels des Verfahrens gemäss den Figuren 1 bis 4 zur Zutrittskontrolle.

Gebäude sind immer mehr durch elektronische Zutrittskontrollen gesichert. Bewohner des Gebäudes bzw. Mitarbeiter, welche in diesem Gebäude tätig sind, erhalten dabei auch von Personen einen Besuch, welche über keine Zugangsberechtigung zum Gebäude verfügen. Damit diesen Personen auf einfache und effiziente Weise Zugang gewährt werden kann, kann das erfindungsgemässe Verfahren zur Zugangskontrolle gemäss den Figuren 1 bis 4 angewendet werden.

In einem Schritt 1 stellt ein Bewohner des Gebäudes oder ein Mitarbeiter, welcher in diesem Gebäude tätig ist, für einen Besucher ohne Zugangsberechtigung zum Gebäude mittels einer Kommunikationseinheit 10, zum Beispiel ein Computer, ein PDA, ein Mobiltelefon etc., an eine Steuereinheit 3 eine Anfrage zur Anlage bzw. zum Erstellen eines Benutzerprofils für den Besucher.

Die Anfrage kann mindestens eine Regel enthalten, zum Beispiel mittels einer Webapplikation, eines geeigneten Computerprogramms, einer Funktionalität einer Terminvereinbarungs- bzw. -verwaltungsapplikation etc. erstellt und an die Steuereinheit 3 gesendet werden. Eine Terminvereinbarungs- bzw. -verwaltungsapplikation stellt zum Beispiel Lotus Notes, Microsoft Outlook etc. dar.

Die Steuereinheit 3 erstellt in einem zweiten Schritt das Benutzerprofil in Abhängigkeit mindestens einer Regel und sendet ein Identifikationscode für das Benutzerprofil an ein Mobiltelefon 1 des Besuchers.

Die mindestens eine Regel kann beliebig sein. Sie wird von der Kommunikationseinheit 10 und/oder von der Steuereinheit 3 festgelegt. Vorstellbar ist, dass die mindestens eine Regel darin besteht, dass keine Regel verwendet wird. Sie kann weiter abhängen von Sicherheitserfordernissen, Bedürfnissen des Besuchers, beispielsweise ein Behinderten gerechter Zugang etc., Bedürfnissen des Besuchten et cetera. Als mindestens eine Regel kann zum Beispiel ein Zeitfenster definiert sein, in welchem der Zugang gewährt wird, sodass der Zugang nur temporär gültig ist. Auch könnte mindestens eine Regel lauten, dass vor Gewährung einer Zutrittsfreigabe überprüft wird, ob sich der Besucher vor dem Gebäude befindet. Eine weitere Regel könnte lauten, dass der Besucher beim Zutritt zum Gebäude entlang des Weges zum Aufenthaltsort des Besuchten mittels geeigneten Überwachungssystemen überwacht bzw. verfolgt wird. Sollte der Besucher die Möglichkeit bekommen mehr als einmal Zutritt zum Gebäude zu haben, so können mittels der mindestens einen Regel die Zutrittszeitpunkte bestimmt werden. Zum Beispiel könnte geregelt werden, dass der Besucher jeweils nur am Freitag von 14.00 - 17.00 Uhr Zutritt haben soll.

Der Identifikationscode kann, wie bereits in den Figuren 1 bis 4 beschrieben wurde, auf verschiedene Art und Weise von der Steuereinheit 3 an das Mobiltelefon 1 gesendet werden. Er kann zum Beispiel in einer Kurznachricht, einer Email, einer Audio- bzw. Sprachnachricht etc. enthalten sein und zum Beispiel aus einem Passwort, Tönen, Tonfolgen, Sprache, einer Buchstabenfolge, einem Link etc. bestehen.

Das Benutzerprofil kann mindestens eine Angabe, die eine Authentifikation des Besuchers zulässt, enthalten. Jedoch ist auch denkbar, dass das Benutzerprofil lediglich die mindestens eine Regel und eine Verifikationsmöglichkeit des Identifikationscodes enthält.

Das Mobiltelefon 1 sendet in einem dritten Schritt den Identifikationscode zur Anforderung eines Zugangscodes an die Steuereinheit 3. Optional kann gemäss Schritt 3' der Identifikationscode vom Mobiltelefon 1 über einen Zugangsknoten 2 an die Steuereinheit 3 gesendet werden. Diese Alternative ist bereits in den Figuren 1 bis 4 beschrieben. Vorteilhaft ist in diesem Fall, dass gleichzeitig festgestellt werden kann, ob der Besucher sich im Zutrittsbereich des Gebäudes aufhält.

Die Steuereinheit 3 überprüft gemäss Schritt 4 den vom Mobiltelefon 1 erhaltenen Identifikationscode und vergleicht diesen Code mit dem Benutzerprofil und den darin enthaltenen Verifikationsmöglichkeiten und/oder Authentifikationsdaten des Besuchers. Als Verifikationsmöglichkeiten bzw. Authentifikationsdaten können zum Beispiel der ursprünglich an das Mobiltelefon 1 gesendete Identifikationscode, die Telefonnummer, der Name, ein Zufallswert etc. verwendet werden. Zum Beispiel könnten Hash-Werte mit einem geeigneten Algorithmus vom ursprünglichen und vom zuletzt gesandten Identifikationscode berechnet und von der Steuereinheit 3 verglichen werden. Ergibt der Vergleich des zuletzt gesandten Identifikationscodes mit dem Benutzerprofil bzw. mit im Benutzerprofil abgelegten bzw. gespeicherten Daten einen gültigen Wert, so wird von der Steuereinheit 3 ein Zugangscode, zum Beispiel eine Zahlenfolge, ein zweidimensionaler Code, ein QR-Code, ein Data Matrix Code, ein Barcode, ein Bild etc. generiert und an das Mobiltelefon 1 gesendet.

Alternativ kann gemäss Schritt 4' die Übermittlung des Zugangscodes von der Steuereinheit 3 auch über den Zugangsknoten 2 an das Mobiltelefon 1 erfolgen.

Der auf einem Ausgabegerät, zum Beispiel einem Display, des Mobiltelefons darstellbare Zugangscode wird gemäss einem fünften Schritt von einem optischen Leseeinheit 5 erfasst und entweder gemäss Schritt 6' über den Zugangsknoten 2 oder gemäss Schritt 6 direkt an die Steuereinheit 3 gesendet.

Die Steuereinheit 3 überprüft gemäss Schritt 7 in Abhängigkeit der mindestens einen Regel im Benutzerprofil und/oder dem Benutzerprofil, ob der Zugangscode gültig bzw. zulässig ist. Ist der Zugangscode gültig wird von der Steuereinheit 3 eine Freigabe des Zutritts an den Zugangsknoten 2 gesendet und somit dem Besucher der Zugang zum Gebäude gewährt.

Enthält das Benutzerprofil die mindestens eine Regel, dass die besuchte Person benachrichtigt werden soll, wird gemäss Schritt 8 von der Steuereinheit 3 an die Kommunikationseinheit 10 eine Benachrichtigung, beispielsweise eine Kurznachricht, eine elektronische Mail, eine Sprachnachricht etc., versendet, sodass der Besuchte über das Eintreffen des Besuchers informiert wird.

Die vorhergehende Beschreibung der Ausführungsbeispiele gemäss der vorliegenden Erfindung dient nur zu illustrativen Zwecken und nicht zum Zwecke der Beschränkung der Erfindung. So kann beispielsweise statt der Kamera auch ein Scanner verwendet werden, um den Zugangscode 6 beziehungsweise 7 auf dem Display 1.1 des Mobiltelefons 1 zu erfassen.

## Patentansprüche

1. Verfahren zur Zugangskontrolle, das folgende Schritte umfasst:
- ein Zugangsknoten (2) empfängt einen Identifikationscode (ID) von einem Mobiltelefon (1) eines Besuchers,
- nachdem der Identifikationscode (ID) von einer Steuereinheit (3) als gültig erkannt wird, wird vom Zugangsknoten (2) an das Mobiltelefon (1) ein von der Steuereinheit (3) generierter Zugangscode (6; 7) gesendet,
- mit einem optischen Lesegerät (5) wird der Zugangscode (6; 7), der auf einer Anzeige (1.1) des Mobiltelefons (1) dargestellt wird, erfasst,
- nachdem der Zugangscode (6; 7) als gültig erkannt wird, wird Zugang gewährt, und
- von der Steuereinheit (3) eine Benachrichtigung über das Eintreffen des Besuchers an eine Kommunikationseinheit (10) versandt wird, wobei die Benachrichtigung gemäss einer Regel eines Benutzerprofils versandt wird, welche Regel bestimmt, dass eine besuchte Person benachrichtigt werden soll.

2. Verfahren nach Patentanspruch 1,
bei dem der Identifikationscode (ID) die Telefonnummer des Mobiltelefons (1) ist.

3. Verfahren nach Patentanspruch 1 oder 2,
bei dem der Zugangscode (6; 7) ein zweidimensionaler optischer Code ist.

4. Verfahren nach Patentanspruch 1, 2 oder 3,
bei dem der Zugangscode (6; 7) ein Data Matrix Code (6) oder ein QR Code (7) ist.

5. Verfahren nach einem der Patentansprüche 1 bis 4,
- bei dem der Identifikationscode (ID) vom Zugangsknoten (2) an die Steuereinheit (3) geleitet wird,
- bei dem die Steuereinheit (3) prüft, ob der Identifikationscode (ID) in einer Liste mit zulässigen Identifikationscodes enthalten ist, und falls dies der Fall ist, den Zugangscode (6; 7) an den Zugangsknoten (2) leitet.

6. Verfahren nach einem der Patentansprüche 1 bis 5, bei dem ein Aufzug (9) zur Benutzung freigegeben wird, wenn der Zugang gewährt wurde.

7. Verfahren nach einem der Patentansprüche 1 bis 6, bei dem der Zugangscode (6; 7) zeitlich beschränkt gültig ist.

8. Verfahren nach einem der Patentansprüche 1 bis 7, bei dem der Zugangscode (6; 7) nur einmal verwendbar ist.

9. Verwendung des Verfahrens nach einem der Patentansprüche 1 bis 8,
zur Zugangskontrolle zu einem Gebäude, einem Gebäudebereich oder einem Aufzug (9).

10. Vorrichtung zur Durchführung des Verfahrens zur Zugangskontrolle nach einem der Patentansprüche 1 bis 9,
- mit einem Zugangsknoten (2), der derart ausgebildet und betreibbar ist, dass er den Identifikationscode (ID) eines Mobiltelefons (1) empfangen und dem Mobiltelefon (1) den Zugangscode (6; 7) übermitteln kann,
- mit einer Steuereinheit (3), die derart ausgebildet und betreibbar ist, dass sie den Identifikationscode (ID) überprüfen und den Zugangscode (6; 7) generieren kann, dass die Steuereinheit (3) eine Benachrichtigung über das Eintreffen des Besuchers an einen Kommunikationseinheit (10) versenden kann, wobei die Benachrichtigung gemäss einer Regel eines Benutzerprofils versandt wird, welche Regel bestimmt, dass eine besuchte Person benachrichtigt werden soll, und
- mit einem optischen Lesegerät (5), die mit der Steuereinheit (3) verbunden ist.

11. Vorrichtung nach Patentanspruch 10,
bei der das optische Lesegerät (5) ein Scanner oder eine Kamera ist.

12. Computerprogrammprodukt,
- das auf einem von einem Computer benutzbaren Medium gespeichert ist,
- das für den Computer lesbaren Programmcode enthält, und
- das dafür sorgt, dass der Computer das Verfahren nach einem der Patentansprüche 1 bis 8 durchführt.

## Claims

1. A method for access control which comprises the following steps:
- an access node (2) receives an identification code (ID) from a mobile telephone (1) of a visitor,
- after the identification code (ID) has been recognized by a control unit (3) as being valid, an access code (6; 7) generated by the control unit (3) is sent to the mobile telephone (1) by the access node (2),
- the access code (6; 7), which is presented on a display (1.1) of the mobile telephone (1), is detected by means of an optical reader (5),
- after the access code (6; 7) has been recognized as being valid, the access is granted, and
- a notification about the arrival of the visitor is sent to a communication unit (10) by the control unit (3), wherein the notification is sent according to a rule of a user profile, which rule determines that a visited person should be notified.

2. The method as claimed in claim 1,
in which the identification code (ID) is the telephone number of the mobile telephone (1).

3. The method as claimed in claim 1 or 2,
in which the access code (6; 7) is a two-dimensional optical code.

4. The method as claimed in claim 1, 2 or 3,
in which the access code (6; 7) is a data matrix code (6) or a QR code (7).

5. The method as claimed in one of claims 1 to 4,
- in which the identification code (ID) is conducted to the control unit (3) by the access node (2),
- in which the control unit (3) checks whether the identification code (ID) is contained in a list of permissible identification codes and, if this is the case, conducts the access code (6; 7) to the access node (2).

6. The method as claimed in one of claims 1 to 5,
in which an elevator (9) is released for use when the access has been granted.

7. The method as claimed in one of claims 1 to 6,
in which the access code (6; 7) is valid for a limited time.

8. The method as claimed in one of claims 1 to 7,
in which the access code (6; 7) can be used only once.

9. The use of the method as claimed in one of claims 1 to 8, for the purpose of access control to a building, a building area or an elevator (9).

10. A device for performing the method for access control as claimed in one of claims 1 to 9,
- comprising an access node (2) which is constructed and can be operated in such a manner that it can receive the identification code (ID) of a mobile telephone (1) and transmit the access code (6; 7) to the mobile telephone (1),
- comprising a control unit (3) which is constructed and can be operated in such a manner that it can check the identification code (ID) and generate the access code (6; 7), that the control unit (3) can send a notification about the arrival of the visitor to a communication unit (10) wherein the notification is sent according to a rule of a user profile, which rule determines that a visited person should be notified, and
- comprising an optical reader (5) which is connected to the control unit (3).

11. The device as claimed in claim 10,
in which the optical reader (5) is a scanner or a camera.

12. A computer program product,
- which is stored on a medium which can be used by a computer,
- which contains program code readable by the computer, and
- which ensures that the computer performs the method as claimed in one of claims 1 to 8.

## Revendications

1. Procédé de contrôle d'accès, comprenant les étapes suivantes :
- réception, par un nœud d'accès (2), d'un code d'identification (ID) d'un téléphone mobile (1) d'un visiteur,
- envoi d'un code d'accès (6 ; 7) généré par une unité de commande (3), du nœud d'accès (2) au téléphone mobile (1), après que le code d'identification (ID) est reconnu comme valide par l'unité de commande (3),
- détection, au moyen d'un lecteur optique (5), du code d'accès (6 ; 7) qui est représenté sur un écran (1.1) du téléphone mobile (1),
- octroi d'accès après que le code d'accès (6 ; 7) a été reconnu comme valide, et
- envoi, par l'unité de commande (3), d'une notification relative à l'arrivée du visiteur au niveau d'une unité de communication (10), la notification étant envoyée conformément à une règle du profil utilisateur qui indique qu'une personne visitée doit être notifiée.

2. Procédé selon la revendication 1, dans lequel le code d'identification (ID) est le numéro de téléphone du téléphone mobile (1).

3. Procédé selon la revendication 1 ou 2, dans lequel le code d'accès (6 ; 7) est un code optique bidimensionnel.

4. Procédé selon la revendication 1, 2 ou 3, dans lequel le code d'accès (6 ; 7) est un code Data Matrix (6) ou un code QR (7).

5. Procédé selon l'une des revendications 1 à 4, dans lequel
- le code d'identification (ID) est transmis du nœud d'accès (2) à l'unité de commande (3),
- l'unité de commande (3) vérifie si le code d'identification (ID) est contenu dans une liste de codes d'identification utilisables et, le cas échéant, transmet le code d'accès (6 ; 7) au nœud d'accès (2).

6. Procédé selon l'une des revendications 1 à 5, dans lequel un ascenseur (9) est admis à l'utilisation lorsque l'accès a été accordé.

7. Procédé selon l'une des revendications 1 à 6, dans lequel le code d'accès (6 ; 7) est valable pour une durée limitée.

8. Procédé selon l'une des revendications 1 à 7, dans lequel le code d'accès (6 ; 7) est utilisable une seule fois.

9. Utilisation du procédé selon l'une des revendications 1 à 8 pour contrôler l'accès à un bâtiment, une zone de bâtiment ou un ascenseur (9).

10. Dispositif pour la mise en œuvre du procédé de contrôle d'accès selon l'une des revendications 1 à 9, comportant
- un nœud d'accès (2) qui est conçu et utilisable de telle sorte qu'il peut recevoir le code d'identification (ID) d'un téléphone mobile (1) et transmettre le code d'accès (6 ; 7) au téléphone mobile (1),
- une unité de commande (3) qui est conçue et utilisable de telle sorte qu'elle vérifie le code d'identification (ID) et peut générer le code d'accès (6 ; 7), de telle sorte que l'unité de commande (3) peut envoyer une notification relative à l'arrivée du visiteur au niveau d'une unité de communication (10), la notification étant envoyée conformément à une règle d'un profil utilisateur, laquelle règle indique qu'une personne visitée doit être notifiée, et
- un lecteur optique (5) connecté à l'unité de commande (3).

11. Dispositif selon la revendication 10, dans lequel le dispositif de lecture optique (5) est un scanner ou une caméra.

12. Produit de programme informatique qui
- est stocké sur un support pouvant être utilisé par un ordinateur,
- contient un code de programme lisible par l'ordinateur, et qui
- veille à ce que l'ordinateur exécute le procédé selon l'une des revendications 1 à 8.
